# EUROPEAN PATENT SPECIFICATION

(11) **EP 4 358 236 B1**
(45) Date of publication and mention of the grant of the patent: **26.08.2026**
(21) Application number: 23152171.7
(22) Date of filing: 18.01.2023
(51) Int. Cl.: H01M 10/615, H01M 10/6571, H01M 10/48, H01M 10/623, H01M 10/647, H02J 7/40, H02J 7/00

(54) **CONSUMER ELECTRONIC DEVICE, AND START METHOD OF CONSUMER ELECTRONIC DEVICE AT LOW TEMPERATURE**
ELEKTRONISCHES VERBRAUCHERGERÄT UND VERFAHREN ZUM STARTEN EINES ELEKTRONISCHEN VERBRAUCHERGERÄTS BEI NIEDRIGER TEMPERATUR
DISPOSITIF ÉLECTRONIQUE GRAND PUBLIC, ET PROCÉDÉ DE DÉMARRAGE DE DISPOSITIF ÉLECTRONIQUE GRAND PUBLIC À BASSE TEMPÉRATURE

(30) Priority: 20.10.2022 CN 202211287635
(43) Date of publication of application: 24.04.2024
(73) Proprietor: Getac Technology Corporation, New Taipei City (TW)
(72) Inventor: LI, Chui-Hsien, 11568 Taipei City (TW); CHANG, Chin-Jung, 11568 Taipei City (TW)
(74) Representative: Viering, Jentschura & Partner mbB Patent- und Rechtsanwälte

(56) References cited:
- WO-A1-2022/055790
- CN-A- 103 515 669
- CN-U- 206 195 376
- CN-U- 216 354 438
- US-A1- 2010 186 975
- US-A1- 2022 322 563
- ALLEYNE J.P.: "BQ78350-R1: Return path of the SMBUS/ SYS PRES and potential issues - Power management forum - Power management - TI E2E support forums", 31 August 2018 (2018-08-31), pages 1 - 5, XP093202872, Retrieved from the Internet <URL:https://e2e.ti.com/support/power-management-group/power-management/f/power-management-forum/724367/bq78350-r1-return-path-of-the-smbus-sys-pres-and-potential-issues>

## Description

The application claims priority to Chinese Patent Application No. 202211287635.5, filed on October 20, 2022.

### BACKGROUND OF THE INVENTION

### FIELD OF THE INVENTION

The present invention relates to the field of electronics, and more particularly, to a consumer electronic device and a start method of a consumer electronic device at a low temperature.

### DESCRIPTION OF THE PRIOR ART

Consumer electronic products usually use lithium batteries, which are extensively applied in cellphones, tablet computers and laptop computers due to the large capacity, high density and small volume of the lithium batteries. However, under a low temperature, the viscosity of the electrolyte inside the battery increases as the temperature lowers, thereby affecting the mobility of lithium ions such that the discharging performance of the battery at a low temperature is degraded. Taking an example of an electrical capacity of 4999 mAh and a cut-off discharge voltage of 3.0 V for instance, the battery capacity is 100% at 23 degrees Celsius. However, only 60% of the capacity remains at -10 degrees Celsius. When the battery is drawn at 0.2C, only 50% is left at -21 degrees Celsius. When the battery is drawn at 0.5C, the battery voltage drops to 3V after about two hours at 25 degrees Celsius. However, at -21 degrees Celsius, the battery can hardly maintain a voltage output of 3.0 V.

Thus, the above issue is extremely unfavorable for applications of consumer electronic products at a low temperature; that is, the standby time and the time of use are significantly shortened, the electrical capacity is consumed faster at a low temperature, and an activation failure of the consumer electronic products may result, hence significantly affecting the functions of the consumer electronic products.

There is currently an approach of using a heater to improve the fluidity of the electrolyte. For a heater disposed inside a consumer electronic product, a large amount of modifications needs to be made to the circuits and transmission specifications in order to actuate the heater. If an external heater is used, the heater and the power supply may need to be carried by the user, resulting in portability inconveniences.

WO 2022/055790 A1 discloses a consumer electronic device, comprising: a battery pack, comprising a battery cell, a heater, adjacent to the battery cell and configured to heat the battery cell, several electrical connecting lines allowing a connection to an internal circuit and an external power source, wherein the internal circuit is configured to receive a battery information, wherein when a battery temperature of the battery information is lower than a first threshold, the internal circuit sends an activation signal to the heater to activate the heater according to the activation signal.

US 2010/0186975 A1 discloses an electric tool having a rechargeable battery. Th effectiveness with which the electric tool can be operated is dependent on the temperature prevailing in the electric tool. In order to increase the operation of the electric tool at low temperatures, a cold start function that can be activated is provided in the electric tool.

Further systems for battery heating are known form CN 103 515 669 A, US 2022/322563 A1, and CN 206 195 376 U.

### SUMMARY OF THE INVENTION

The present invention provides a consumer electronic device according to independent claim 1 and a start method according to independent claim 7. The dependent claims show further preferred embodiments of the said consumer electronic device and the said star method, respectively. The consumer electronic device includes a battery module and a system chip. The battery module includes battery cells, a heater, a battery management circuit and an electrical connector. The heater is adjacent to the battery cells, and heats the battery cells. The battery management circuit is coupled to the battery cells and the heater. The electrical connector includes an information transmission interface and a power transmission interface. The information transmission interface is coupled to the battery management circuit, and the power transmission interface is coupled to the battery cells. The system chip is coupled to the information transmission interface, and is configured to receive battery information from the battery management circuit through the information transmission interface. When a battery temperature of the battery information is lower than a first threshold, the system chip sends an activation signal to the battery management circuit through the information transmission interface, for the battery management circuit to activate the heater according to the activation signal.

The information transmission interface includes an existence pin and a data pin. The existence pin is coupled to the battery management circuit and the system chip, and is configured to output a battery existence signal to the system chip. The data pin is coupled between the battery management circuit and the system chip, and is configured to output battery information to the system chip.

The consumer electronic product further includes a power supply circuit. The power supply circuit is electrically connected to the system chip, and is configured to supply power to the system chip and the power transmission interface. The battery module may be a removable battery. The system chip receives the battery existence signal through the existence pin to the battery management circuit, and determines that the power transmission interface is electrically connected to the power supply circuit upon detecting the battery existence signal.

In some embodiments, the battery management circuit further includes a battery management chip and a power switch. The battery management chip is coupled to the data pin, and is configured to generate the battery information according to a state of the battery cells. The power switch is coupled to the existence pin, and is coupled between the battery cells and the heater. Accordingly, the power switch connects the battery cells to the heater in response to the activation signal, so as to activate the heater.

In some embodiments, the battery management circuit further includes a level circuit, which is coupled to the existence pin so as to pull the level of the existence pin to a given level.

In some embodiments, the first threshold is -10 to 0 degrees Celsius.

In some embodiments, after the heater is activated, the system chip further receives the battery information from the battery management circuit through the data pin again. When the battery temperature of the battery information received again is higher than a second threshold, the system chip sends a stop signal to the battery management circuit through the existence pin, for the battery management circuit to stop the heater according to the stop signal.

In some embodiments, the second threshold is 10 to 25 degrees Celsius.
-
-

The start method of a consumer electronic product at a low temperature includes: receiving battery information of a battery module through a data pin of the battery module; comparing a battery temperature of the battery information with a first threshold; when the battery temperature is lower than the first threshold, sending an activation signal to the battery module through an existence pin, so as to start a heater built in the battery module; receiving the battery information of the battery module through the data pin again; and performing a start-up procedure of the consumer electronic product under power supplied by the battery module when the battery temperature of the battery information received agaom is higher than the first threshold.

In some embodiments, the first threshold is -10 to 0 degrees Celsius.

The start method of a consumer electronic product further includes: before receiving the battery information of the battery module through the data pin of the battery module, detecting a battery existence signal from the existence pin.

In some embodiments, the start method of a consumer electronic product further includes: after the heater is activated, receiving the battery information of the battery module through the data pin of the battery module again; comparing the battery temperature of the battery information with a second threshold; and when the battery temperature of the battery information received again is higher than the second threshold, sending a stop signal to the battery management circuit through the existence pin, for the battery management circuit to stop the heater according to the stop signal. More specifically, inn some embodiments, the second threshold is 10 to 25 degrees Celsius.

It can be understood from the above embodiments that, by performing bi-directional transmissions with an existing information transmission interface between the system chip and the battery module, start control of the heater that satisfies the specifications of an output/input interface of an originally designed battery module can be achieved without altering the specifications , or the overall battery module is heated by an external heating means to increase the temperature of the battery cells.

### BRIEF DESCRIPTION OF THE DRAWINGS

FIG. 1 is a block schematic diagram of a consumer electronic device according to one embodiment;
FIG. 2 is a perspective diagram of an example of the battery module in FIG. 1;
FIG. 3 is a circuit diagram of a battery module according to one embodiment; and
FIG. 4 is a flowchart of a start method of a consumer electronic device at a low temperature according to one embodiment.

### DETAILED DESCRIPTION OF THE EMBODIMENTS

For better clarity, widths of some elements and areas in the drawings are scaled up. Throughout of the description, the same numerals and symbols in the drawings represent the same elements.

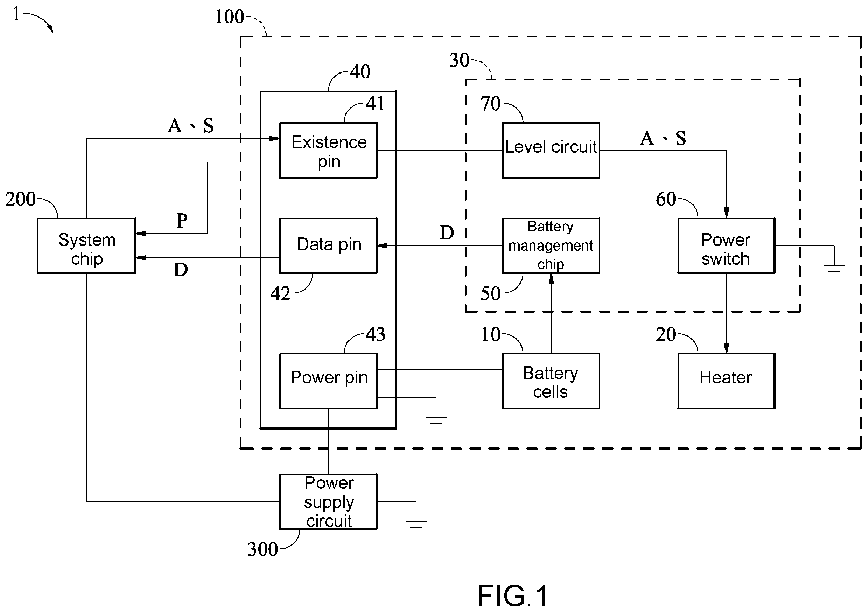

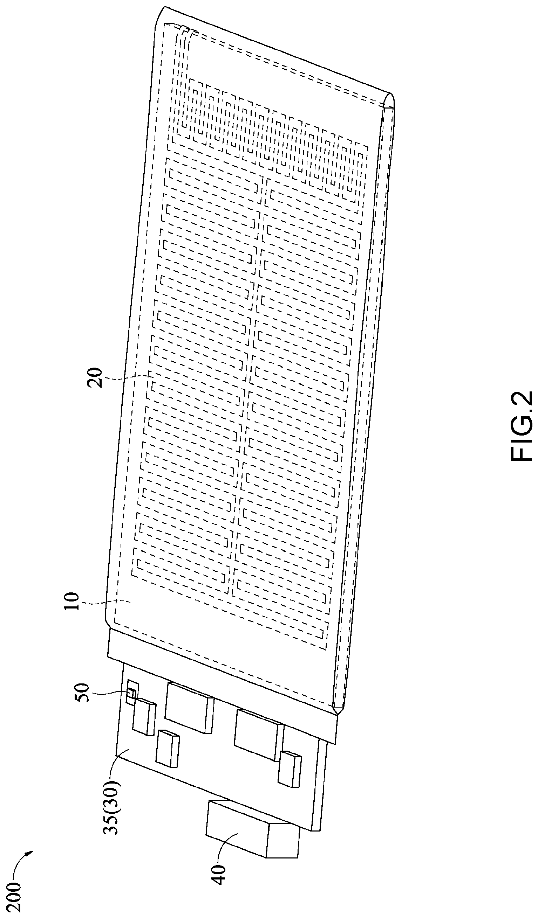

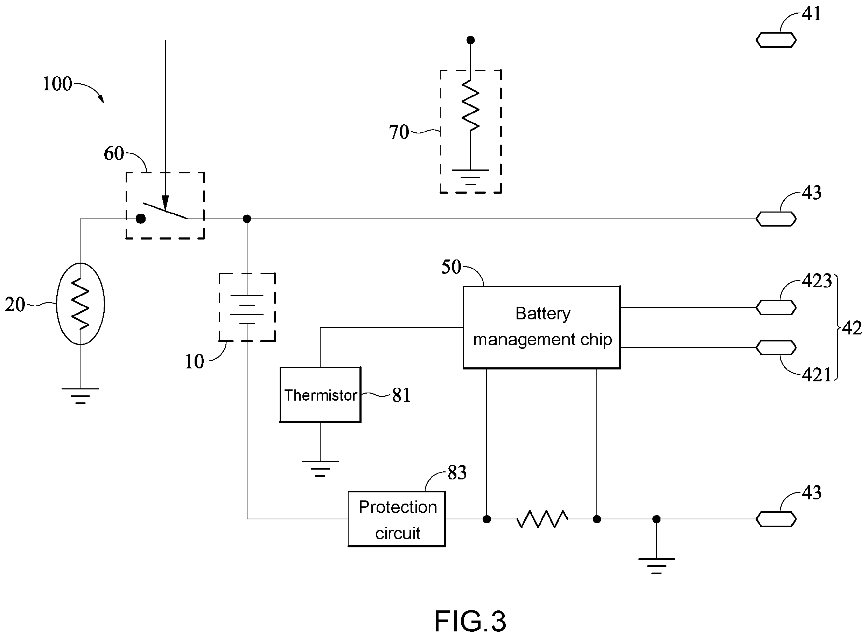

FIG. 1 shows a block schematic diagram of a consumer electronic device according to one embodiment. FIG. 2 shows a perspective diagram of an example of the battery module in FIG. 1. FIG. 3 shows a circuit diagram of a battery module according to an embodiment. As shown in FIG. 1 to FIG. 3, a consumer electronic device 1 includes a battery module 100 and a system chip 200. The battery module 100 includes battery cells 10, a heater 20, a battery management circuit 30 and an electrical connector 40. The heater 20 is adjacent to the battery cells 10, and is configured to heat the battery cells 10. Herein, FIG. 2 depicts that the heater 20 envelops the outside of the battery cells 10; however, this is merely and example and is not to be construed as a limitation. For example, in response to actual requirements, the heater 20 may also be directly adhered to an upper surface or a lower surface of the battery cells 10.

The battery management circuit 30 is coupled to the battery cells 10 and the heater 20. The electrical connector 40 includes an information transmission interface and a power transmission interface. The information transmission interface includes an existence pin 41, and one or more data pins 42 (for example, a system clock pin 421 and a system data pin 423). The existence pin 41 and the data pin 42 are coupled to the battery management circuit 30. The power transmission interface includes a pair of power pins 43 (for example, a positive electrical pin and a negative electrical pin). Herein, FIG. 1 depicts only one single power pin 43 and one single data pin 42 for better understanding. The power pin 43 is coupled to the battery cells 10. The system chip 200 is coupled to the existence pin 41 and the data pin 42, and receives battery information D from the battery management circuit 30 through the data pin 42. When a battery temperature of the battery information D is lower than a first threshold, the system chip 200 sends an activation signal A to the battery management circuit 30 through the existence pin 41, for the battery management circuit 30 to activate the heater 20 according to the activation signal A.

Thus, by performing bi-directional transmissions with an existing information transmission interface between the system chip 200 and the battery module 100, start control of the heater 20 that satisfies the specifications of an output/input interface of an originally designed battery module 100 can be achieved without altering the specifications, or the overall battery module 100 is heated by an external heating means to increase the temperature of the battery cells 10.

Again referring to FIG. 1, the consumer electronic device 1 further includes a power supply circuit 300. The power supply circuit 300 is electrically connected to the system chip 200, and is configured to supply power to the system chip 200. In other words, the power supply circuit 300 can draw electrical power stored in the battery cells 10 through the power pin 43, accordingly adjust the electrical power to a level needed by the system chip 200 and supply the electrical power to the system chip 200.

According to the invention, the battery module 100 is a removable battery, and is removeably assembled on a body of the consumer electronic device 1. Herein, the system chip 200 further confirms through the existence pin 41 whether the battery module 100 is assembled on the body of the consumer electronic device 1, that is, determining whether the power pin 43 is electrically connected to the power supply circuit 300. When the battery module 100 is assembled on the body of the consumer electronic device 1, the existence pin 41 outputs a battery existence signal P, and thus the system chip 200 can determine, by detecting the battery existence signal P from the existence pin 41, that the power pin 43 is connected to the power supply circuit 300. That is to say, when the system chip 200 detects the battery existence signal P, the system chip 200 can accordingly determine that the power pin 43 and the power supply circuit 300 are electrically connected.

In some embodiments, the battery management circuit 30 may further include a level circuit 70. The level circuit 70 is configured to pull a level of the existence pin 41 to a given potential (that is, the battery existence signal P). In some embodiments, the level circuit 70 may include an impedance element coupled between the existence pin 41 and a ground, wherein the impedance element may be a resistor. More specifically, upon detecting the battery existence signal P from the existence pin 41, that is, determining that the power pin 43 is electrically connected to the power supply circuit 300, the battery management circuit 30 switches the voltage at the existence pin 41 to a low voltage level through the level circuit 70, and switches the existence pin 41 to an output mode.

Again referring to FIG. 1 and FIG. 2, the battery management circuit 30 may further include a battery management chip 50 and a power switch 60. The battery management chip 50 is coupled to the data pin 42, and is configured to generate the battery information D according to a state of the battery cells 10. For example, the battery management chip 50 obtains the battery information D by controlling charging/discharging of the battery cells 10, that is, detecting the state of the battery cells 10. For example, the battery information D includes a battery temperature, a capacity and a time of use, and is provided to the system chip 200 for determination. The power switch 60 is coupled to the existence pin 41, and is coupled between the battery cells 10 and the heater 20. Accordingly, the power switch 60 connects the battery cells 10 and the heater 20 in response to the activation signal A, so as to activate the heater 20. For example, the power switch 60 is normally off. When the power switch 60 is controlled by the activation signal A, that is, when the activation signal A is received, the power switch 60 switches from off to on, so as to electrically connect the power cells 10 to the heater 60 through the power switch 60, that is, power is supplied to the heater 20.

As shown in FIG. 3, in one embodiment, the battery management chip 50 can be implemented by a gauge integrated circuit (IC), and calculate the battery temperature by using a thermistor 81. A protection circuit 83 may further be provided between the battery cells 10 and the power pin 43, so as to prevent damage of the battery cells 10 caused by surges or an overly large voltage.

In some embodiments, the switch 60 may be implemented by a MOS or other types of transistors, and the system chip 200 turns on the power switch 60 by applying a voltage of a predetermined level (that is, the activation signal A).

In some embodiments, the electrical connector 40, the power switch 60, and the power supply circuit 300 are further coupled to the ground.

Again referring to FIG. 1 and FIG. 3, although not shown in the drawings, a person skill in the art would be able to understand that the number of the data pins 42 may correspond to system specifications. Assuming that the communication interface between the system chip 200 and the battery module 100 is SM Bus, the data pin 42 may be provided in a pair, that is, the system clock pin 421 and the system data pin 423. The system chip 200 is coupled to the system clock pin 421 of the electrical connector 40, and transmits a system clock signal (for example, SM Bus clock) with an external system through the system clock pin 421. Moreover, the system chip 200 is coupled to the data clock pin 423 of the electrical connector 40, and transmits a data clock signal (for example, SM Bus data) with an external system through the data clock pin 423. In other words, the battery management chip 50 further receives the system clock signal and the system data signal from the system chip 200, accordingly converts the state of the battery module 100 detected into the system clock signal and the system data signal, and transmits system clock signal and the system data signal to the system chip 200 through the system clock pin 421 and the system data pin 423.

Referring to FIG. 2, the battery cells 10, the electrical connector 40 and the battery management chip 50 are in fact mounted on a circuit board 35 and are packaged into a removable battery. The power supply circuit 300 and the system chip 200 are formed on a motherboard of the consumer electronic device 1 and are electrically connected to the electrical connector 40 of the removable battery through the corresponding electrical connector 40.

**In** some embodiments, the system chip 200 further receives the battery information D of the battery management circuit 30 through the data pin 42 again. When the battery temperature of the battery information D received again is higher than the second threshold, the system chip 200 sends a stop signal S (for example, to stop outputting the activation signal A) to the battery management circuit 30 through the existence pin 41, for the battery management circuit 30 to stop the heater 20 according to the stop signal S. For example, when the system chip 20 does not output the activation signal A, the level of the existence pin 41 is pulled down to a first potential because of the level circuit 70. At this point, a control terminal of the power switch 60 is at the first potential because being coupled to the existence pin 41, so that the state of the power switch 60 is off due to the first potential. When the system chip 20 outputs the activation signal A having a second potential, the level of the existence pin 41 is pulled up to the second potential because of the activation signal A. At this point, the control terminal of the power switch 60 rises from the first potential to the second potential because being coupled to the existence pin 41, so that the state of the power switch 60 is switched to on. **In** other words, the activation signal A and the stop signal S may be at the second potential and the first potential, respectively, wherein the second potential is greater than the first potential.

In some embodiments, the first threshold is -10 to 0 degrees Celsius, preferably -5 to 0 degrees Celsius; and the second threshold is 10 to 25 degrees

Celsius, and preferably 15 to 23 degrees Celsius. The numerical values above are merely example and are not to be construed as limitations. In practice, adjustment or setting may be made by taking into account the type, battery capacity and application environment of the consumer electronic device 1.

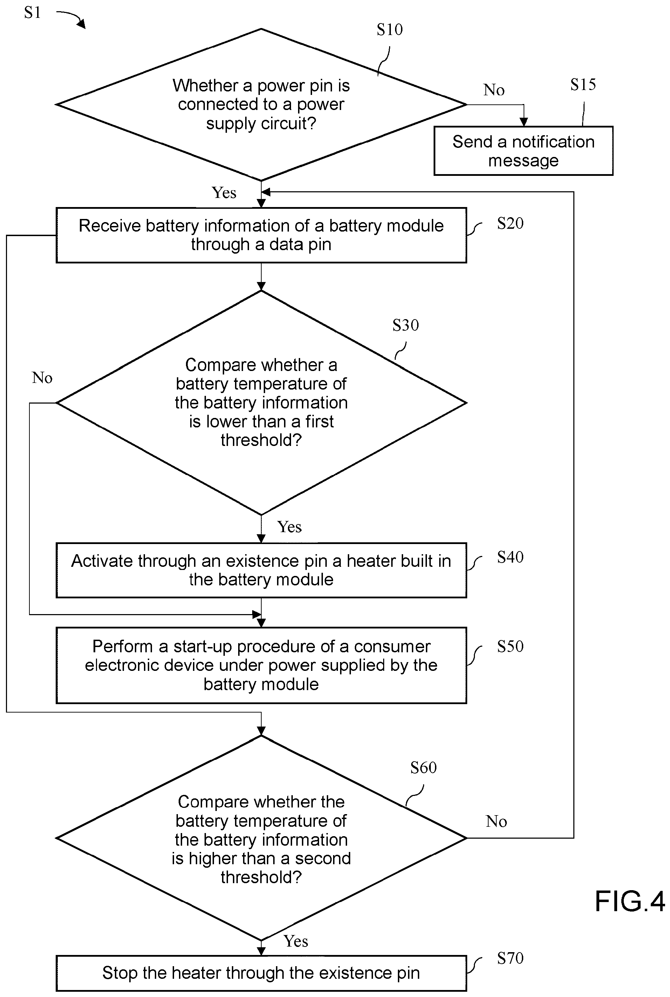

FIG. 4 shows a flowchart of a start method of a consumer electronic device at a low temperature according to one embodiment. As shown in FIG. 3 and also referring to FIG. 1, a start method S1 of at a consumer electronic product at a low temperature includes: step S20 of receiving the battery information D of the battery module 100 through the data pin 42 of the battery module 100; step S30 of comparing the battery temperature of the battery information D with a first threshold, and proceeding to step S40 when the battery temperature is lower than the first threshold, or proceeding to step S50 when the battery temperature is lower than the first threshold or when the temperature in the battery information D received again from the battery module 100 through the data pin 42 is higher than the first threshold; step S40 of switching the existence pin 41 to output and send the activation signal A to the battery module 100 through the existence pin 41, so as to start the heater 20 built in the battery module 100; and step S50, performing a start-up procedure of the consumer electronic device 1 under power supplied by the battery module 100.

More specifically, in step S40, the activation signal A may be a pulse width modulation (PWM) signal; in some embodiments, an output ratio of the PWM signal may be further adjusted according to the battery temperature. For example, the output ratio of the PWM signal is directly proportional to the battery temperature in Celsius, and the output ratio is a positive value. In some embodiments, the output ratio alpha (α) is "battery temperature in Celsius/-29), and 0<α<1.

In some embodiment, before step S20, the start method S1 of a consumer electronic device further includes: step S10 of the system chip 200 detecting the battery existence signal P from the existence pin 41, and determining whether the power pin 43 of the battery module 100 is electrically connected to the power supply circuit 300. Step 15 is performed if the system chip 200 does not detect the battery existence signal P for a continuous period of time and determines that the power pin 43 is not electrically connected to the power supply circuit 300. **In** step S15, a notification message is sent, for example, displaying information indicating that the battery is not electrically connected on a display screen.

In some embodiments, after step S40, the start method S1 of a consumer electronic product further returns to step S20 of receiving the battery information D of the battery module 100 through the data pin 42 of the battery module 100 again. Moreover, the start method S1 further includes step S60 of comparing the battery temperature of the battery information D with the second threshold in the battery information D, and proceeding to step S70 when the battery temperature of the battery information D received again is higher than the second threshold; and step S70 of sending the stop signal S to the battery management circuit 30 through the existence pin 41, for the battery management circuit 30 to stop the heater 20 according to the stop signal S.

In conclusion, by performing bi-directional transmissions with an existing information transmission interface between the system chip 200 and the battery module 100, start control of the heater 20 that satisfies the specifications of an output/input interface of an originally designed battery module 100 can be achieved without altering the specifications, or the overall battery module 100 is heated by an external heating means to increase the temperature of the battery cells 10.

The present invention is disclosed as the embodiments above. However, these embodiments are not to be construed as limitation to the present invention. Slight modifications and variations may be made by a person skilled in the art without departing from the scope of the present invention. Therefore, these modifications and variations are to be encompassed within the scope of the claims of the present invention which is defined by the appended claims.

## Claims

1. A consumer electronic device (1), comprising:
a battery module (100), comprising:
a battery cell (10);
a heater (20), adjacent to the battery cell (10), configured to heat the battery cell (10);
a battery management circuit (30), electrically coupled to the battery cell (10) and the heater (20); and
an electrical connector (40), comprising:
an information transmission interface, coupled to the battery management circuit (30); and
a power transmission interface, coupled to the battery cell (10); and
a system chip (200), coupled to the information transmission interface, configured to receive a battery information (D) of the battery management circuit (30) through the information transmission interface,
wherein when a battery temperature of the battery information (D) is lower than a first threshold, the system chip (200) sends an activation signal (A) to the battery management circuit (30) through an existence pin (41) of the information transmission interface, for the battery management circuit (30) to activate the heater (20) according to the activation signal (A);
wherein the information transmission interface comprises:
the existence pin (41), coupled to the battery management circuit (30) and the system chip (200), configured to output a battery existence signal (P) to the system chip (200); and
a data pin (42), coupled between the battery management circuit (30) and the system chip (200), configured to output battery information (D) to the system chip (200);
wherein the consumer electronic device (1) further comprises:
a power supply circuit (300), electrically connected to the system chip (200), configured to supply power to the system chip (200) and the power transmission interface;
wherein, the battery module (100) is a removable battery, and
wherein the system chip (200) receives the battery existence signal (P) through the existence pin (41) to the battery management circuit (30), and determines that the power transmission interface is electrically connected to the power supply circuit (300) upon receiving the battery existence signal (P).

2. The consumer electronic device (1) according to claim 1, wherein the battery management circuit (30) further comprises:
a battery management chip (50), coupled to the data pin (42), configured to generate the battery information (D) according to a state of the battery cell (10); and
a power switch (60), coupled to the existence pin (41) and coupled between the battery cells (10) and the heater (20), configured to connect the battery cell (10) to the heater (20) in response to the activation signal (A), so as to activate the heater (20).

3. The consumer electronic device (1) according to claim 1, wherein the battery management circuit (30) further comprises:
a level circuit (70), coupled to the existence pin (41) so as to pull the level of the existence pin (41) to a given level.

4. The consumer electronic device (1) according to claim 1, wherein the first threshold is -10 to 0 degrees Celsius.

5. The consumer electronic device (1) according to claim 1, wherein after the heater (20) is activated, the system chip (200) further receives the battery information (D) of the battery management circuit (30) through the existence pin (41) again, and sends a stop signal (S) to the battery management circuit (30) through the existence pin (41) when the battery temperature of the battery information (D) received again is higher than a second threshold, for the battery management circuit (30) to stop the heater (20) according to the stop signal (S).

6. The consumer electronic device (1) according to claim 5, wherein the second threshold is 10 to 25 degrees Celsius.

7. A start method (S1) of a consumer electronic device (1) at a low temperature, comprising:
receiving (S20) battery information (D) of a battery module (100) through a data pin (42) of the battery module (100);
comparing (S30) a battery temperature of the battery information (D) with a first threshold;
when the battery temperature is lower than the first threshold, sending an activation signal (A) to the battery module (100) through an existence pin (41), so as to activate (S40) a heater (20) built in the battery module (100);
receiving the battery information (D) of the battery module (100) through the data pin (42) again; and
when the battery temperature of the battery information (D) received again is higher than the first threshold, performing (S50) a start-up procedure of a consumer electronic device (1) under power supplied by the battery module (100);
wherein the start method further comprises:
before receiving the battery information (D) of the battery module (100) through the data pin (42) of the battery module (100), detecting a battery existence signal (P) from the existence pin (41).

8. The start method (S1) of a consumer electronic device (1) at a low temperature according to claim 7, wherein the first threshold is -10 to 0 degrees Celsius.

9. The start method (S1) of a consumer electronic device (1) at a low temperature according to claim 7, further comprising:
after the heater (20) is activated, receiving the battery information (D) of the battery module (100) through the data pin (42) of the battery module (100) again;
comparing (S60) the battery temperature of the battery information with a second threshold; and
when the battery temperature of the battery information (D) received again is higher than a second threshold, sending a stop signal (S) to the battery management circuit (30) through the existence pin (41), for the battery management circuit (30) to stop the heater (20) according to the stop signal (S).

10. The start method (S1) of a consumer electronic device (1) at a low temperature according to claim 9, wherein the second threshold is 10 to 25 degrees Celsius.

## Patentansprüche

1. Unterhaltungselektronikvorrichtung (1), aufweisend:
ein Batteriemodul (100), aufweisend:
eine Batteriezelle (10);
eine Heizvorrichtung (20) benachbart zu der Batteriezelle (10), die konfiguriert, um die Batteriezelle (10) zu erwärmen;
eine Batteriemanagementschaltung (30), die elektrisch mit der Batteriezelle (10) und der Heizvorrichtung (20) verbunden ist; und
einen elektrischen Verbinder (40), aufweisend:
eine Informationsübertragungsschnittstelle, die mit der Batteriemanagementschaltung (30) verbunden ist; und
eine Leistungsübertragungsschnittstelle, die mit der Batteriezelle (10) verbunden ist; und
einen Systemchip (200), der mit der Informationsübertragungsschnittstelle verbunden ist, der konfiguriert ist, um über die Informationsübertragungsschnittstelle Batterieinformationen (D) der Batteriemanagementschaltung (30) zu empfangen,
wobei, wenn eine Batterietemperatur der Batterieinformationen (D) niedriger als ein erster Schwellenwert ist, der Systemchip (200) über einen Vorhandensein-Pin (41) der Informationsübertragungsschnittstelle ein Aktivierungssignal (A) an die Batteriemanagementschaltung (30) sendet, damit die Batteriemanagementschaltung (30) die Heizvorrichtung (20) entsprechend dem Aktivierungssignal (A) aktiviert;
wobei die Informationsübertragungsschnittstelle aufweist:
den Vorhandensein-Pin (41), der mit der Batteriemanagementschaltung (30) und dem Systemchip (200) verbunden ist und konfiguriert ist, um ein Batterie-Vorhandensein-Signal (P) an den Systemchip (200) auszugeben; und
einen Daten-Pin (42), der zwischen der Batteriemanagementschaltung (30) und dem Systemchip (200) verbunden ist und konfiguriert ist, um Batterieinformationen (D) an den Systemchip (200) auszugeben;
wobei die Unterhaltungselektronikvorrichtung (1) ferner aufweist:
eine Leistungsversorgungsschaltung (300), die elektrisch mit dem Systemchip (200) verbunden ist und konfiguriert ist, um den Systemchip (200) und die Leistungsübertragungsschnittstelle mit Leistung zu versorgen;
wobei das Batteriemodul (100) eine herausnehmbare Batterie ist, und
wobei der Systemchip (200) das Batterie-Vorhandensein-Signal (P) über den Vorhandensein-Pin (41) an die Batteriemanagementschaltung (30) empfängt und beim Empfang des Batterie-Vorhandensein-Signals (P) ermittelt, dass die Leistungsübertragungsschnittstelle elektrisch mit der Leistungsversorgungsschaltung (300) verbunden ist.

2. Unterhaltungselektronikvorrichtung (1) gemäß Anspruch 1, wobei die Batteriemanagementschaltung (30) ferner aufweist:
einen Batteriemanagementchip (50), der mit dem Daten-Pin (42) verbunden ist und konfiguriert ist, um die Batterieinformationen (D) entsprechend einem Zustand der Batteriezelle (10) zu erzeugen; und
einen Leistungsschalter (60), der mit dem Vorhandensein-Pin (41) verbunden ist und zwischen den Batteriezellen (10) und der Heizvorrichtung (20) angeschlossen ist, der konfiguriert ist, um die Batteriezelle (10) als Reaktion auf das Aktivierungssignal (A) mit der Heizvorrichtung (20) zu verbinden, um die Heizvorrichtung (20) zu aktivieren.

3. Unterhaltungselektronikvorrichtung (1) gemäß Anspruch 1, wobei die Batteriemanagementschaltung (30) ferner aufweist:
eine Pegelschaltung (70), die mit dem Vorhandensein-Pin (41) verbunden ist, um den Pegel des Vorhandensein-Pins (41) auf einen vorgegebenen Pegel zu ziehen.

4. Unterhaltungselektronikvorrichtung (1) gemäß Anspruch 1, wobei der erste Schwellenwert -10 bis 0 Grad Celsius beträgt.

5. Unterhaltungselektronikvorrichtung (1) gemäß Anspruch 1, wobei der Systemchip (200) nach der Aktivierung der Heizvorrichtung (20) ferner die Batterieinformationen (D) der Batteriemanagementschaltung (30) erneut über den Vorhandensein-Pin (41) empfängt und über den Vorhandensein-Pin (41) ein Stoppsignal (S) an die Batteriemanagementschaltung (30) sendet, wenn die Batterietemperatur der erneut empfangenen Batterieinformationen (D) höher als ein zweiter Schwellenwert ist, damit die Batteriemanagementschaltung (30) die Heizvorrichtung (20) entsprechend dem Stoppsignal (S) anhält.

6. Unterhaltungselektronikvorrichtung (1) gemäß Anspruch 5, wobei der zweite Schwellenwert 10 bis 25 Grad Celsius beträgt.

7. Startverfahren (S1) für eine Unterhaltungselektronikvorrichtung (1) bei niedriger Temperatur, aufweisend:
Empfangen (S20) von Batterieinformationen (D) eines Batteriemoduls (100) über einen Daten-Pin (42) des Batteriemoduls (100);
Vergleichen (S30) einer Batterietemperatur der Batterieinformationen (D) mit einem ersten Schwellenwert;
wenn die Batterietemperatur niedriger als der erste Schwellenwert ist, Senden eines Aktivierungssignals (A) an das Batteriemodul (100) über einen Vorhandensein-Pin (41), um eine in das Batteriemodul (100) eingebaute Heizvorrichtung (20) zu aktivieren (S40);
erneutes Empfangen der Batterieinformationen (D) des Batteriemoduls (100) über den Daten-Pin (42); und
wenn die Batterietemperatur der erneut empfangenen Batterieinformationen (D) höher als der erste Schwellenwert ist, Durchführen (S50) eines Startvorgangs einer Unterhaltungselektronikvorrichtung (1) unter Leistung, die durch das Batteriemodul (100) zugeführt wird;
wobei das Startverfahren ferner aufweist:
vor dem Empfangen der Batterieinformationen (D) des Batteriemoduls (100) über den Daten-Pin (42) des Batteriemoduls (100) Detektieren eines Batterie-Vorhandensein-Signals (P) vom Vorhandensein-Pin (41).

8. Startverfahren (S1) für eine Unterhaltungselektronikvorrichtung (1) bei niedriger Temperatur gemäß Anspruch 7, wobei der erste Schwellenwert -10 bis 0 Grad Celsius beträgt.

9. Startverfahren (S1) für eine Unterhaltungselektronikvorrichtung (1) bei niedriger Temperatur gemäß Anspruch 7, ferner aufweisend:
nach der Aktivierung der Heizvorrichtung (20) erneutes Empfangen der Batterieinformationen (D) des Batteriemoduls (100) über den Daten-Pin (42) des Batteriemoduls (100);
Vergleichen (S60) der Batterietemperatur der Batterieinformationen mit einem zweiten Schwellenwert; und
wenn die Batterietemperatur der erneut empfangenen Batterieinformationen (D) höher als ein zweiter Schwellenwert ist, Senden eines Stoppsignals (S) über den Vorhandensein-Pin (41) an die Batteriemanagementschaltung (30), damit die Batteriemanagementschaltung (30) die Heizvorrichtung (20) entsprechend dem Stoppsignal (S) anhält.

10. Startverfahren (S1) einer Unterhaltungselektronikvorrichtung (1) bei niedriger Temperatur gemäß Anspruch 9, wobei der zweite Schwellenwert 10 bis 25 Grad Celsius beträgt.

## Revendications

1. Appareil électronique de consommateur (1), comprenant :
un module de batterie (100), comprenant :
une cellule de batterie (10) ;
un dispositif de chauffage (20), adjacent à la cellule de batterie (10), configuré pour chauffer la cellule de batterie (10) ;
un circuit de gestion de batterie (30), couplé électriquement à la cellule de batterie (10) et au dispositif de chauffage (20) ; et
un connecteur électrique (40), comprenant :
une interface de transmission d'informations, couplée au circuit de gestion de batterie (30) ; et
une interface de transmission de puissance, couplée à la cellule de batterie (10) ; et
une puce de système (200), couplée à l'interface de transmission d'informations, configurée pour recevoir des informations de batterie (D) du circuit de gestion de batterie (30) via l'interface de transmission d'informations,
dans lequel, lorsqu'une température de batterie des informations de batterie (D) est inférieure à un premier seuil, la puce de système (200) envoie un signal d'activation (A) au circuit de gestion de batterie (30) via une broche de présence (41) de l'interface de transmission d'informations, afin que le circuit de gestion de batterie (30) active le dispositif de chauffage (20) conformément au signal d'activation (A) ;
dans lequel l'interface de transmission d'informations comprend :
la broche de présence (41), couplée au circuit de gestion de batterie (30) et à la puce de système (200), configurée pour émettre un signal de présence de batterie (P) vers la puce de système (200) ; et
une broche de données (42), couplée entre le circuit de gestion de batterie (30) et la puce de système (200), configurée pour émettre des informations de batterie (D) à la puce de système (200) ;
dans lequel l'appareil électronique de consommateur (1) comprend en outre :
un circuit d'alimentation en puissance (300), connecté électriquement à la puce de système (200), configuré pour alimenter en puissance la puce de système (200) et l'interface de transmission de puissance ;
dans lequel le module de batterie (100) est une batterie amovible, et
dans lequel la puce de système (200) reçoit le signal de présence de batterie (P) via la broche de présence (41) vers le circuit de gestion de batterie (30), et détermine que l'interface de transmission de puissance est connectée électriquement au circuit d'alimentation en puissance (300) dès réception du signal de présence de batterie (P).

2. Appareil électronique de consommateur (1) selon la revendication 1, dans lequel le circuit de gestion de batterie (30) comprend en outre :
une puce de gestion de batterie (50), couplée à la broche de données (42), configurée pour générer les informations de batterie (D) en fonction d'un état de la cellule de batterie (10) ; et
un commutateur de puissance (60), couplé à la broche de présence (41) et couplé entre les cellules de batterie (10) et le dispositif de chauffage (20), configuré pour connecter la cellule de batterie (10) au dispositif de chauffage (20) en réponse au signal d'activation (A), de manière à activer le dispositif de chauffage (20).

3. Appareil électronique de consommateur (1) selon la revendication 1, dans lequel le circuit de gestion de batterie (30) comprend en outre :
un circuit de niveau (70), couplé à la broche de présence (41) de manière à amener le niveau de la broche de présence (41) à un niveau donné.

4. Appareil électronique de consommateur (1) selon la revendication 1, dans lequel le premier seuil est de -10 à 0 degrés Celsius.

5. Appareil électronique de consommateur (1) selon la revendication 1, dans lequel, une fois le dispositif de chauffage (20) activé, la puce de système (200) reçoit en outre les informations de batterie (D) du circuit de gestion de batterie (30) à nouveau via la broche de présence (41), et envoie un signal d'arrêt (S) au circuit de gestion de batterie (30) via la broche de présence (41) lorsque la température de batterie des informations de batterie (D) reçues à nouveau est supérieure à un deuxième seuil, afin que le circuit de gestion de batterie (30) arrête le dispositif de chauffage (20) conformément au signal d'arrêt (S).

6. Appareil électronique de consommateur (1) selon la revendication 5, dans lequel le deuxième seuil est de 10 à 25 degrés Celsius.

7. Procédé de démarrage (S1) d'un appareil électronique de consommateur (1) à basse température, comprenant :
la réception (S20) d'informations de batterie (D) d'un module de batterie (100) via une broche de données (42) du module de batterie (100) ;
la comparaison (S30) d'une température de batterie des informations de batterie (D) avec un premier seuil ;
lorsque la température de batterie est inférieure au premier seuil, l'envoi d'un signal d'activation (A) au module de batterie (100) via une broche de présence (41), de manière à activer (S40) un dispositif de chauffage (20) intégré au module de batterie (100) ;
la réception à nouveau des informations de batterie (D) du module de batterie (100) via la broche de données (42) ; et
lorsque la température de batterie des informations de batterie (D) reçues à nouveau est supérieure au premier seuil, l'exécution (S50) d'une procédure de démarrage d'un appareil électronique de consommateur (1) sous la puissance fournie par le module de batterie (100) ;
dans lequel le procédé de démarrage comprend en outre :
avant la réception des informations de batterie (D) du module de batterie (100) via la broche de données (42) du module de batterie (100), la détection d'un signal de présence de batterie (P) provenant de la broche de présence (41).

8. Procédé de démarrage (S1) d'un appareil électronique de consommateur (1) à basse température selon la revendication 7, dans lequel le premier seuil est de -10 à 0 degrés Celsius.

9. Procédé de démarrage (S1) d'un appareil électronique de consommateur (1) à basse température selon la revendication 7, comprenant en outre :
après l'activation du dispositif de chauffage (20), la réception à nouveau des informations de batterie (D) du module de batterie (100) via la broche de données (42) du module de batterie (100) ;
la comparaison (S60) de la température de batterie des informations de batterie avec un deuxième seuil ; et
lorsque la température de batterie des informations de batterie (D) reçues à nouveau est supérieure à un deuxième seuil, l'envoi d'un signal d'arrêt (S) au circuit de gestion de batterie (30) via la broche de présence (41), afin que le circuit de gestion de batterie (30) arrête le dispositif de chauffage (20) conformément au signal d'arrêt (S).

10. Procédé de démarrage (S1) d'un appareil électronique de consommateur (1) à basse température selon la revendication 9, dans lequel le deuxième seuil est de 10 à 25 degrés Celsius.
